Europäisches Patentamt

European Patent Office

Office européen des brevets

(19)

(11) Veröffentlichungsnummer : **0 035 648**
**B1**

(12) **EUROPÄISCHE PATENTSCHRIFT**

(45) Veröffentlichungstag der Patentschrift :
05.10.83

(21) Anmeldenummer : 81100821.8

(22) Anmeldetag : 05.02.81

(51) Int. Cl.³ : **B 23 K 20/08**, B 23 K 20/22,
B 23 K 20/16

(54) **Sprengplattierter Schichtverbundwerkstoff.**

(30) Priorität : 04.03.80 DE 3008238

(43) Veröffentlichungstag der Anmeldung :
16.09.81 Patentblatt 81/37

(45) Bekanntmachung des Hinweises auf die Patenterteilung : 05.10.83 Patentblatt 83/40

(84) Benannte Vertragsstaaten :
**DE FR GB IT NL SE**

(56) Entgegenhaltungen :
**BE A 773 482**
**DE B 1 281 813**
**FR A 1 320 570**
**GB A 1 040 057**
**US A 2 856 682**
**US A 3 489 618**

(73) Patentinhaber : **DYNAMIT NOBEL AKTIENGELL-
SCHAFT**
**Patentabteilung Postfach 1209**
**D-5210 Troisdorf, Bez. Köln (DE)**

(72) Erfinder : **Köcher, Reiner**
**Alte Jülicher Strasse 207**
**D-5160 Düren (DE)**
Erfinder : **Richter, Ulf, Dr.**
**Steinpfad 22**
**D-5909 Burbach-Würgendorf (DE)**

EP 0 035 648 B1

Sprengplattierter Schichtverbundwerkstoff

Die Erfindung befaßt sich mit einem sprengplattierten Schichtverbundwerkstoff der im Oberbegriff des Anspruchs 1 angegebenen Art.

Beispielsweise für chemische Reaktoren werden Verbundwerkstoffe verwendet, die als Grundwerkstoff un- oder niedriglegierten kohlenstoffhaltigen Stahl und als Auflagewerkstoff eine Ni-Basislegierung wie beispielsweise die molybdänhaltige NiCr-Legierung vom Typ NiMo 16 Cr 16 Ti — (Hastelloy C) — oder NiMo 28 — (Hastelloy B 2) — aufweisen. Beim Verbinden dieser Werkstoffe durch Sprengplattieren erfahren die Ni-Basis-Auflagewerkstoffe eine besonders hohe Kaltverfestigung. In der Bindezone kann die Härte bis auf Spitzenwerte von über HV 500 ansteigen. Damit verbunden sind starke innere Spannungen und lichtmikroskopisch nicht nachweisbare Verfestigungen, die in der Umgebung der Bindezone als Zugspannungen wirken.

Ein Abbau dieser Härtespitzen durch Wärmebehandlung erfolgt erst bei etwa 900 °C. Bei dieser Temperatur kann jedoch durch Korngrenzenausscheidungen in der Nickellegierung bereits eine Verschlechterung der Korrosionsbeständigkeit auftreten. Außerdem erfolgt eine starke Diffusion von Kohlenstoff aus dem Stahl-Grundwerkstoff in die Nickellegierung hinein, die ihrerseits wieder eine Aufhärtung durch Karbidbildung in der Umgebung der Bindezone verursacht.

Die starken Zugspannungen im Bereich der Bindezone können bei Verformungen in den nachfolgenden Verarbeitungsstufen Rißbildungen auslösen, da sich die durch die Verformung bedingte innere Spannung der von der Plattierung her schon vorhandenen inneren Spannung überlagert, so daß örtlich die Festigkeit des Verbundwerkstoffs überschritten werden kann.

Beim Sprengplattieren eines Körosionsbeständigen metallischen Auflage werkstoffes auf einen metallischen Grundwerkstoff ist es bereits bekannt zwischen diesen Werkstoffen eine metallische Zwischenschicht vorzusehen, die eine Diffusion zwischen den Plattierwerkstoffen und eine Versprödung der Werkstoffe verhindern und der Gefahr von Rißbildungen entgegen wirken soll (BE-A-773 482, DE-B-1 281 813). Diese Zwischenschicht wird auf einen der beiden Ausgangswerkstoffe auf chemischen oder elektrischen Weg so dünn aufgetragen, daß nach dem Sprengplattieren gemäß der DE-B-1 281 813 von der Zwischenschicht, abgesehen von Mischkristallen, keine Reste mehr zurückbleiben.

Der Erfindung liegt die Aufgabe zugrunde, die vorstehenden Nachteile zu vermeiden, d. h. insbesondere eine Maßnahme anzugeben, welche es ermöglicht, nach der Plattierung im Material vorhandene Zugspannungen zu verringern.

Diese Aufgabe wird gelöst durch das Einplattieren einer speziellen metallischen Zwischenschicht entsprechend dem Kennzeichen des Anspruchs 1. Diese Zwischenschicht wird sowohl mit dem Grundwerkstoff als auch mit dem Auflagewerkstoff bevorzugt durch Sprengplattieren in einem oder gegebenenfalls auch zwei Schritten verbunden. Sie kann aber z. B. auch mit dem Grundwerkstoff durch Walzplattieren und anschließend daran mit dem Auflagewerkstoff durch Sprengplattieren verbunden werden. Die Zwischenschicht hat in der Regel eine minimale Dicke von etwa 0,5 mm. Bevorzugt wird eine Dicke zwischen etwa 1 und 2,5 mm. Beim Sprengplattieren wird das Gefüge dieser metallischen Zwischenschicht zwar ebenfalls kaltverfestigt, jedoch in einem Maße, das zwischen der Kaltverfestigung von Grund- und Auflagewerkstoff liegt. Entsprechend sind die in der Zwischenschicht induzierten inneren Spannungen zwar größer als die im Kohlenstoffstahl als Grundwerkstoff, jedoch geringer als die in der Ni-Basislegierung als Auflagewerkstoff. Die Zwischenschicht wirkt daher spannungsausgleichend, so daß die Spannungskonzentration in der Bindezone teilweise abgebaut wird, und bei anschließenden Verformungsoperationen die Summe der auf den Schichtverbundwerkstoff einwirkenden Zugspannungen nicht mehr über die Zerreißfestigkeit der Werkstoffe anwächst. Ein weiterer Vorteil der Zwischenschicht liegt darin, daß sie im Falle einer Wärmebehandlung und Warmumformung des Verbundwerkstoffs keinen schädlichen Diffusionseinfluß, insbesondere durch Kohlenstoffeinwirkung, auf den Auflagewerkstoff ausübt.

Als Metall für die erfindungsgemäße Zwischenschicht kann beispielsweise reines Nickel verwendet werden, das beim Sprengplattieren eine Kaltverfestigung erfährt, die zwischen derjenigen der beiden anderen Plattierungspartner liegt. Bevorzugt wird jedoch nach Anspruch 2 rostfreier Stahl verwendet. Insbesondere werden austenitische rostfreie Stähle verwendet, gegebenenfalls können aber auch ferritische rostfreie Stähle benutzt werden. Das Austenitgefüge des rostfreien Stahls wird durch das Sprengplattieren ebenfalls kaltverfestigt mit Härtespitzen bis etwa HV 400, jedoch sehr viel geringer als der Auflagewerkstoff mit Härtespitzen von über HV 500. Andererseits ist die Kaltverfestigung größer als die des Grundwerkstoffs, so daß erfindungsgemäß ein Spannungsausgleich erreicht und damit die Verformbarkeit des Schichtwerkstoffs in der gewollten Weise verbessert wird. Im Falle einer Wärmebehandlung verhindert diese kohlenstoffarme Zwischenschicht darüber hinaus die Einwanderung von Kohlenstoff aus dem Grund- in den Auflagewerkstoff und damit eine nachteilige Karbidbildung in der Ni-Basislegierung, insbesondere einer hochkorrosionsbeständigen molybdänhaltigen Nickellegierung.

**Ansprüche**

1. Sprengplattierter Schichtverbundwerkstoff mit un- oder niedriglegiertem Kohlenstoffstahl als Grundwerkstoff und einer Ni-Basislegierung, beispielsweise einer hochkorrosionsbeständigen molybdänhaltigen Nickellegierung, als Auflagewerkstoff, dadurch gekennzeichnet, daß zwischen dem Grund- und dem Auflagewerkstoff eine mit diesen verbundene, ursprünglich separate Zwischenschicht mit einer minimalen Dicke von 0,5 mm aus einem Metall angeordnet ist, das beim Sprengplattieren eine größere Kaltverfestigung als der Grundwerkstoff, jedoch eine kleinere als der Auflagewerkstoff erfährt und das bei Wärmebehandlung des Verbundwerkstoffs keinen schädlichen Einfluß durch Diffusion auf den Auflagewerkstoff ausübt.

2. Verbundwerkstoff nach Anspruch 1, dadurch gekennzeichnet, daß die Zwischenschicht aus rostfreiem Stahl, insbesondere aus austenitischem rostfreiem Stahl, ist.

### Claims

1. Explosively clad layered composite material with unalloyed or low-alloy carbon steel as base material and a Ni-based alloy, for example of a highly corrosion-resistant molybdenum-containing nickel alloy, as covering material, characterised in that, between the base material and the covering material there is arranged an originally separate intermediate layer united therewith, with a minimum thickness of 0.5 mm, formed of a metal which, on explosive cladding experiences a cold-work hardening greater than the base material, but smaller than the covering material, and which does not give rise to any deleterious influence on the covering material by diffusion on thermal treatment of the composite material.

2. Composite material according to claim 1, characterised in that the intermediate layer is formed of stainless steel, especially of austenitic stainless steel.

### Revendications

1. Matériau composite stratifié plaqué par explosion, comprenant un acier au carbone non allié ou faiblement allié en tant que matériau de base et un alliage à base de Ni, par exemple un alliage de nickel contenant du molybdène, à forte résistance à la corrosion, en tant que matériau d'apport, caractérisé par le fait qu'entre le matériau de base et le matériau d'apport est disposée une couche intermédiaire reliée à ces derniers, initialement séparée, d'une épaisseur minimale de 0,5 mm, en un métal qui, lors du placage par explosion, subit un écrouissage à froid plus important que le matériau de base, mais plus faible que le matériau d'apport et qui, lors d'un traitement thermique du matériau composite, n'exerce pas d'effet nuisible par diffusion sur le matériau d'apport.

2. Matériau composite selon la revendication 1, caractérisé par le fait que la couche intermédiaire est en acier inoxydable, en particulier en acier inoxydable austénitique.